# EUROPEAN PATENT APPLICATION

(11) **EP 2 230 435 A1**
(43) Date of publication of application: **22.09.2010**
(21) Application number: 09012136.9
(22) Date of filing: 24.09.2009
(51) Int. Cl.: F16L 37/62, E02F 9/22, E02F 3/36

(54) **Extendable fluid coupler**

(30) Priority: 16.03.2009 US 160471 P
(71) Applicant: Caterpillar Work Tools B. V., 5232 BJ 's-Hertogenbosch (NL)
(72) Inventor: Luyendijk, Joost, Peoria IL 61629-9510 (US)
(74) Representative: Wagner, Karl H.

(57) **Abstract**

A fluid coupler arrangement (18) for a first pressurized fluid circuit is disclosed. The fluid coupler arrangement (18) has an extendable fluid coupler (19). The fluid coupler arrangement also has a receiving fluid coupler (20), to be coupled to the extendable coupler, so that in a coupled condition of the couplers the first pressurized fluid circuit extends through the couplers. The fluid coupler arrangement also has fluid channels that extend through the couplers. The extendable coupler (19) has a static portion (22) and a piston (21) that is extendable with respect to the static portion. The extendable coupler has a compensatory surface being fixedly connected to the static portion. The compensatory surface (30) has a deviation with respect to the wall of the fluid channel of the extendable coupler, to at least partially retain the piston in an extended position when fluid flows through the couplers.

## Description

### Technical Field

The present disclosure is directed to a fluid coupler, more particular to an extendable fluid coupler.

### Background

Work tools, such as shears, grabs, or buckets are oftentimes coupled with host machines, such as excavators, to perform work operations like cutting, grabbing or excavating. The work tools may be coupled to a boom or stick mechanism of the host machine via a fixed connection or a quick release connection. The latter allows for a relatively easy exchange of the work tool, wherein the operator may connect or change a work tool without leaving the cab. In a quick release connection, a machine mounting bracket is arranged to slide into a work tool mounting bracket, while the work tool is positioned on the ground. After the mounting bracket of the work tool and the mounting bracket of the machine are aligned, a locking wedge or pin can move into a locked position to lock the work tool to the machine.

When connecting the work tool to the machine, the hydraulic hoses of the main pressurized fluid circuit also need to be connected for driving the work tool. Presently, automatic hydraulic hose connection systems are known, wherein the operator can activate the hydraulic hose connection from the cab. Such systems often rely on interconnecting hydraulic hose couplers that are arranged on the machine and the work tool. The hose couplers are automatically coupled during connection of the work tool to machine. When the work tool mounting bracket is slit into the machine mounting bracket, at the same time, the opposite hose couplers are moved into a coupled position. In such systems, a relatively high risk of causing damage to the hydraulic hose couplers is present, because of the high forces and rough alignments between the respective mounting brackets. When the hose couplers are not aligned accurately, pressurized fluid may escape or the couplers and/or hoses may need to be changed. Since the hydraulic circuits of host machines may operate under relatively high pressures, any leakage may cause major spillage of the fluid and significant downtime.

A coupling arrangement for coupling two ends of a pressurized hydraulic fluid circuit of a work tool and a machine is disclosed in European patent application EP1388616. The coupling arrangement comprises a quick release mounting bracket for coupling a work tool to a machine. The coupling arrangement comprises a receiving fluid coupler and a moving fluid coupler, each coupler being connected to a hydraulic hose of a high pressure auxiliary hydraulic circuit. One of the couplers is arranged on the work tool, the other coupler is arranged on the machine. Both couplers can be connected to each other for providing a fluid passage between the hydraulic hoses, so that pressurized fluid can circulate in the hydraulic circuit. The moving fluid coupler is moved on a sledge to and from the receiving fluid coupler by an actuator. When the respective moving coupler is coupled to the receiving coupler, a locking notch engages the moving coupler to keep both couplers coupled, so that the actuator can release its pressure while fluid flows through the couplers. The locking notch use a significant space in the coupling arrangement. Moreover, after multiple engagements, the locking notch may become damaged, or play may occur, so that leakage of fluid between the couplers may occur. However, without the locking notch, the actuator would have to withstand significant forces that are exerted by the pressurized fluid flowing through the circuit, which could disengage the couplers. Furthermore, during movement of the respective coupler, the hydraulic hose that is coupled to the moving coupler may become wedged, caught, or trapped in or between the structure of the machine and/or the work tool.

The system of the present disclosure is directed towards overcoming one or more of the constraints set forth above.

### Summary of the Invention

In one aspect, the present disclosure is directed to a fluid coupler arrangement for a first pressurized fluid circuit. The fluid coupler arrangement may comprise an extendable fluid coupler. The fluid coupler arrangement may also comprise a receiving fluid coupler, to be coupled to the extendable coupler, so that in a coupled condition of the couplers the first pressurized fluid circuit extends through the couplers. The fluid coupler arrangement may further comprise fluid channels extending through the couplers. The extendable coupler may comprise a static portion and a piston that is extendable with respect to the static portion. The extendable coupler may comprise a compensatory surface that may be fixedly connected to the static portion. The compensatory surface may comprise a deviation with respect to the wall of the fluid channel of the extendable coupler, to at least partially retain the piston in an extended position when fluid flows through the couplers.

In another aspect, the present disclosure is directed to an extendable fluid coupler for coupling ends of a pressurized fluid circuit. The extendable fluid coupler may comprise a static portion and a piston that is extendable with respect to the static portion. The extendable fluid coupler may also comprise a fluid channel extending through the static portion and the piston. The extendable fluid coupler may further comprise a compensatory surface being fixedly connected to the static portion. The compensatory surface may comprise a deviation with respect to the wall of the fluid channel, to at least partially retain the piston in an extended position when fluid flows through the couplers.

In again another aspect, the present disclosure is directed to a method of at least partially retaining two fluid couplers of a first pressurized fluid circuit in a coupled condition. The method may comprise moving an extendable coupler at least partly in the direction of a receiving coupler. The method may further comprise pressurizing fluid in the first pressurized fluid circuit to flow through the extendable and the receiving coupler. The method may further comprise creating a force by the fluid flow around a compensatory surface sufficient to retain the couplers together.

### Brief Description of the Drawings

Fig. 1 is a side view of a machine and a work tool provided with a coupling arrangement.
Fig. 2 is a cross-sectional side view of a coupling arrangement.
Fig. 3 is a cross-sectional side view of a fluid coupler arrangement.
Fig. 4 is a schematic, cross-sectional side view of a fluid coupler arrangement.
Fig. 5 is a cross-sectional front view of a fluid coupler arrangement.

### Detailed Description

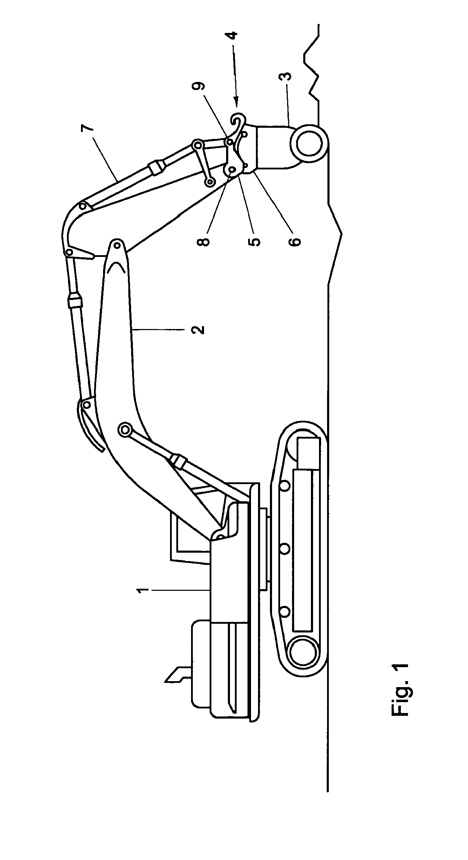

Fig. 1 illustrates an exemplary machine 1, which may be a host machine 1. The machine 1 may be a mobile machine such as for example an excavator, a back hoe, a digger, a loader, a knuckle boom loader, a harvester or a forest machine. The machine 1 as shown in the exemplary embodiment of Fig. 1 is a hydraulic excavator, provided with a boom 2, in particular a hydraulic boom mechanism for driving the boom 2 and/or a work tool 3. In this description, a boom 2 may be understood as comprising a hydraulic stick mechanism, or the like. The work tool 3 may be coupled to the machine 1, in particular to the boom 2. In the exemplary embodiment shown, the work tool 3 comprises a rotary cutter. In other embodiments, usable work tools 3 may for example include cutters, augers, buckets, blades, brooms, cutters, cold planers, compactors, delimbers, forks, grapples, hammers, hoppers, mulchers, multi-processors, pulverizers, rakes, rippers, saws, scarifiers, shears, plows, grinders, thumbs, tillers, trenchers, truss booms, or the like. For example, the work tool 3 may comprise a frame that in itself carries multiple exchangeable and/or interexchangeable tools. In an embodiment, the work tool 3 may comprise a demolition work tool 3, or at least a work tool 3 for heavy duty applications.

The machine 1 may be provided with a coupling arrangement 4. The coupling arrangement 4 may comprise a machine mounting bracket 5 and a work tool mounting bracket 6. The machine mounting bracket 5 may be coupled to the machine 1. The work tool mounting bracket 6 may be coupled to the work tool 3. The mounting brackets 5, 6 are arranged to be coupled to each other. If the mounting brackets 5, 6 are coupled to the machine 1 and the work tool 3, respectively, this may allow the work tool 3 to be coupled to the boom 2 by operating the boom 2 from the machine cab.

A pressurized fluid assembly 7 may extend along the boom 2 for moving the boom 2 and the work tool 3. The pressurized fluid assembly 7 may extend along the machine mounting bracket 5. The pressurized fluid assembly 7 may be arranged to move the work tool 3 and/or the boom 2. The pressurized fluid assembly 7 may comprise multiple hydraulic circuits, including a main pressurized fluid circuit, an auxiliary pressurized fluid circuit, a secondary pressurized fluid circuit, and a quick coupler pressurized fluid circuit. The main pressurized fluid circuit may be arranged to drive the boom 2. The main pressurized fluid circuit may be arranged to pivot the boom parts with respect to each other. The auxiliary pressurized fluid circuit may be arranged to move the work tool 3. For example, the auxiliary pressurized fluid circuit may be arranged to pivot and/or rotate the work tool 2. The secondary pressurized fluid circuit may be arranged to drive moving parts in the work tool 3, such as rotary parts or the like. The quick coupler pressurized fluid circuit may be arranged to lock the work tool 3 to the boom 2.

A first pressurized fluid circuit may extend in and/or along the boom 2 and the work tool 3, so that the work tool 3, or parts thereof, may perform work operations. The first pressurized fluid circuit may comprise the auxiliary pressurized fluid circuit and/or the secondary pressurized fluid circuit. A portion of the first pressurized fluid circuit may extend in and/or along the machine 1. A second portion of the first pressurized fluid circuit may extend in and/or along the work tool 3. The first pressurized fluid circuit may comprise a hydraulic circuit. The first pressurized fluid circuit may be provided with a pump for driving and circulating the fluid through the circuit. The first pressurized fluid circuit may be arranged to drive the fluid at relatively high pressure and speed, for example at least approximately 150 liters per hour, or at least approximately 250 liters per hour, for example approximately 300 liters per hour. The first pressurized fluid circuit may comprise fluid circuit channels extending through hoses, tubes, pumps and coupler parts.

As shown in Fig. 1, the boom 2 may be coupled to the machine mounting bracket 5 via a first pin 8. The first pin 8 may also be referred to as stick pin. The pressurized fluid assembly 7 may be coupled to the machine mounting bracket 5 via a second pin 9. The second pin 9 may also be referred to as a power link pin.

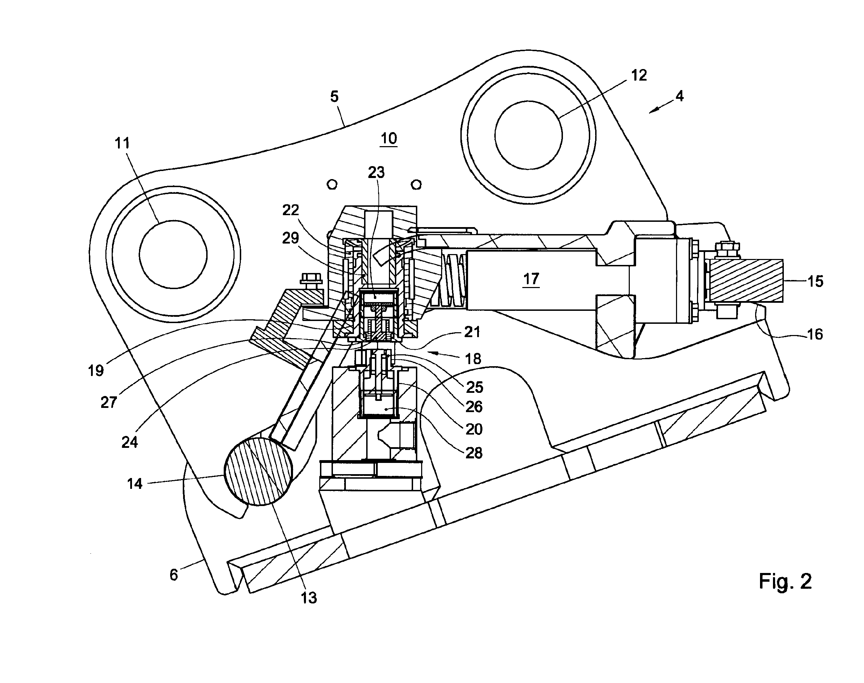

Fig. 2 illustrates the coupling arrangement 4. The coupling arrangement 4 may comprise an assembly of mounting brackets 5, 6. The top part of the coupling arrangement 4 may comprise the machine mounting bracket 5. The bottom part of the coupling arrangement 4 may comprise the work tool mounting bracket 6, of which a part is shown. The assembly of mounting brackets 5, 6 may also be referred to as quick release mounting bracket and/or quick coupler. The machine mounting bracket 5 may comprise flanges 10 for connecting the mounting bracket 5 to the end of the boom 2 and to the pressurized fluid assembly 7, with the aid of the first and second pins 8, 9, respectively. The flanges 10 may be provided with axle openings 11, 12. First pin receiving openings 11 may serve as bearing locations for supporting the first pin 8. The first pin 8 may form a pivot axis about which the work tool 3 may pivot with respect to the boom 2. Second pin receiving openings 12 may serve as bearing locations for supporting the second pin 9, so that the pressurized fluid assembly 7 may drive the work tool 3 to pivot with respect to the boom 2 about the first pin 8.

The machine mounting bracket 5 may comprise inserts 13. One of such inserts 13 may be shown in Fig. 2. The work tool mounting bracket 6 may comprise insert receiving elements 14, like hooks, cut-outs and/or indentations, which are arranged to partially enclose the inserts 13. The machine mounting bracket 5 may further comprise a locking member 15. The locking member 15 may comprise a mechanical locking member 15, such as a wedge, pin, notch, bar, or the like. The work tool mounting bracket 6 may comprise a locking member receiving element 16, for receiving the locking member 15. The locking member receiving element 16 may comprise a hook. The locking member 15 may lock the mounting brackets 5, 6 to each other, so that the work tool 3 is locked to the machine 1, by at least partly moving into the locking member receiving element 16. The locking member 15 may be driven by a locking member actuator 17. The locking member actuator 17 may be driven by a second pressurized fluid circuit.

The second pressurized fluid circuit may comprise the quick coupler pressurized fluid circuit. The second pressurized fluid circuit may have a lower speed and/or pressure than the first pressurized fluid circuit. The speed of the fluid in the second pressurized fluid circuit in operation may be approximately 150 liters per hour or less, preferably 100 liters per hour or less, more preferably 75 liters per hour or less.

The coupling arrangement 4 may comprise a fluid coupler arrangement 18. The fluid coupler arrangement 18 may comprise an extendable coupler 19 and a receiving coupler 20, that may be coupled together to establish a fluid passage through the extendable and receiving coupler 19, 20. The fluid coupler arrangement 18 may comprise at least one pair of couplers 19, 20 for being able to circulate the fluid along the machine 1 and work tool 3. The fluid coupler arrangement 18 may comprise multiple pairs of fluid couplers 19, 20. The extendable coupler 19 may be provided in the machine mounting bracket 5. The receiving coupler 6 may be provided in the work tool mounting bracket 6. In a coupled condition, the first pressurized fluid circuit may extend through the couplers 19, 20. The extendable coupler 19 may comprise a piston 21. The extendable coupler 19 may further comprise a static portion 22. The piston 21 may be extendable with respect to the static portion 22. When the mounting brackets 5, 6 are coupled the piston 21 may be moveable into the direction of the receiving coupler 20. A fluid channel 23 may extend through the static portion 22 and the piston 21. The static portion 22 may be connected to a further fluid channel such as a hydraulic hose.

The couplers 19, 20 may be provided with interconnecting parts for coupling the couplers 19, 20. The interconnecting parts may be arranged so to connect to each other so that a fluid tight coupling may be established. The interconnecting parts may comprise a valve assembly comprising interconnectable valves. In an embodiment, the front end of the piston 21 may be provided with a female valve element 24. The female valve element 24 may be arranged to open and close the end of the fluid channel 23 of the extendable coupler 19.

The receiving coupler 20 may comprise a male valve element 25 that may be arranged to be connected to the female valve element 24. To slide into each other, the valve elements 24, 25 may have different diameters. The male valve element 25 may have a cylindrical outer wall 26 that corresponds to a receiving inner wall 27 of the female valve element 24, so that the male valve element 25 may slide into the female valve element 24. These interconnecting walls 26, 27 may be cylindrical. In another embodiment, the extendable coupler 19 may be provided with the male valve element 25 and the receiving coupler 20 may be provided with the female valve element 24. Also other types of valve assemblies may be used.

A fluid channel 28 may extend through the receiving coupler 20. The male valve element 25 may be arranged to open and close a fluid channel. Both valve elements 24, 25 may comprise a dry-break valve assembly. The valve assembly may be arranged to stay connected without leakage at relatively high working pressures, which may be pressures used in main pressurized fluid circuits, auxiliary pressurized fluid circuits, or secondary pressurized fluid circuits of machine-work tool assemblies.

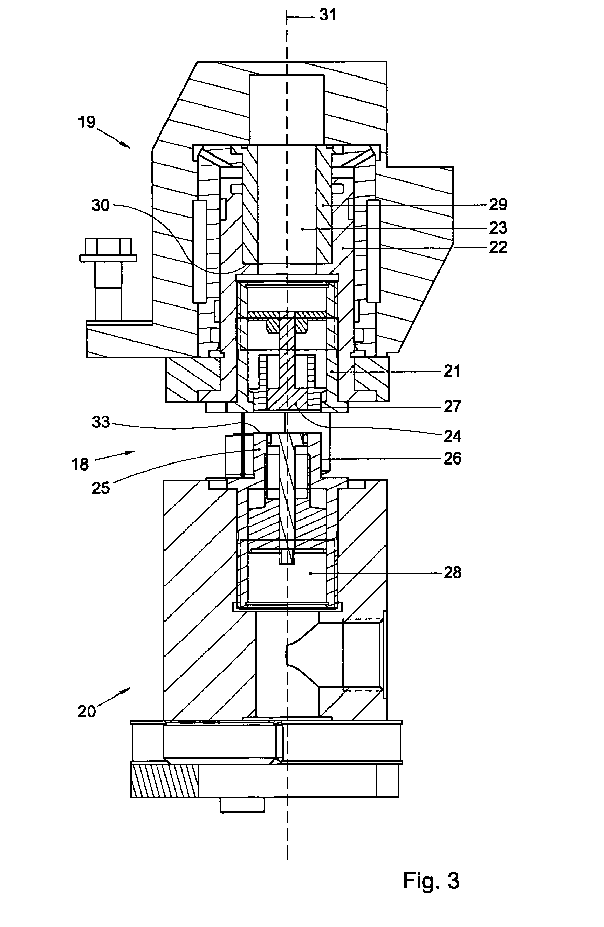

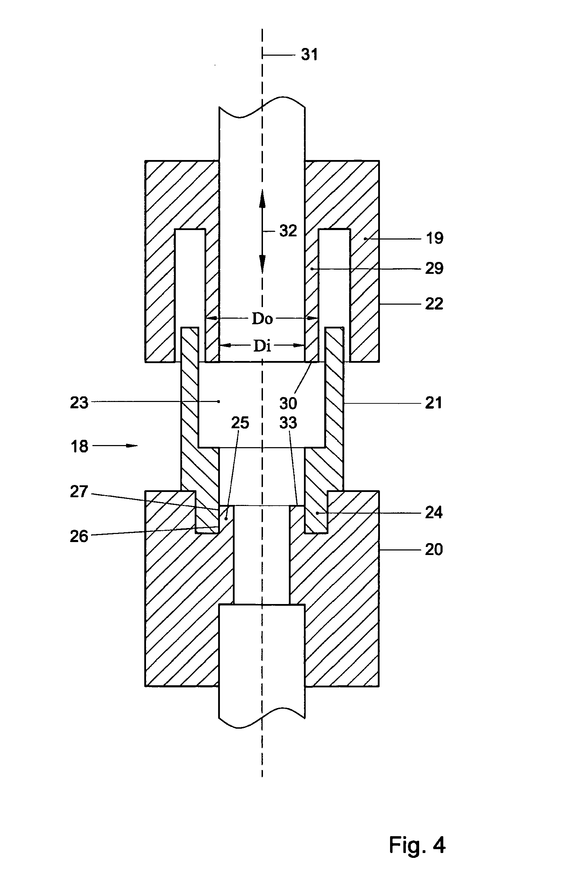

Fig. 3 illustrates a fluid coupler assembly 18, in decoupled condition. The extendable coupler 19 may comprise a compensatory surface element 29. The compensatory surface element 29 may comprise a compensatory surface 30. The compensatory surface 30 may be fixedly connected to the static portion 22. The compensatory surface 30 may be arranged to at least partially retain the piston 21 in an extended position when fluid flows through the couplers (Fig. 4). The compensatory surface 30 may comprise a deviation with respect to the wall of the fluid channel. The compensatory surface 30 may comprise a rib, a funnel-shaped part, a protrusion, or the like in the fluid channel wall, or some protruding or intruding deviation sufficient to create a retaining force when fluid flows through or around the surface 30. The dimensions and/or shape of the surface 30 may depend on the difference in diameter of the interconnecting parts of the couplers 19, 20. The dimensions and/or shape of the compensatory surface 30 may depend on the fluid dynamics of the couplers 19,20. Fluid dynamics may be coupler 19, 20 specific, and/or may depend on the fluid type and/or fluid pressure used for the circuit.

The compensatory surface 30 may be designed in such a way that a retaining force is created when fluid flows through or around the surface 30. The retaining force is sufficient to at least partially retain the couplers 19, 20 together when fluid is flowing through them. In this embodiment an additional or supplemental retaining force or mechanism may also be used, such as for example a resilient pushing element and/or an auxiliary drive element 34. An auxiliary drive element 34 is described below. In one embodiment, the compensatory surface 30 creates enough force to retain the couplers 19, 20 by itself.

In the shown embodiment, the compensatory surface 30 may project inwards from the wall of the fluid channel of the piston 21. The compensatory surface element 29 may comprise a tube, which may extend in the inside of the piston 21. The compensatory surface 30 may be ring-shaped. The compensatory surface 30 may extend approximately perpendicular to a main direction of flow 32 of the fluid. The main direction of flow of the fluid may be in two opposite directions, to allow the fluid to circulate in the circuit. The compensatory surface element 29, the piston 21 and the fluid channel 23 of the extendable coupler 19 may extend coaxially around a central axis 31.

Fig. 4 schematically illustrates a fluid coupler assembly 18 in coupled condition. The compensatory surface 30 may be the front end surface of the compensatory surface element 29. The compensatory surface 30 may extend substantially perpendicular to a main direction of flow 32 of the fluid in the fluid channel 23 and/or to the fluid channel wall. The compensatory surface element 29 may extend through the fluid channel of the piston 21. The compensatory surface element 29 may be fixedly connected to the static portion 22 of the extendable fluid coupler 19. The fluid channel of the piston 21 and the compensatory surface element 29 may together substantially form the wall of the fluid channel 23 of the extendable coupler 19.

The male valve element 25 may have a front end surface 33. The front end surface 33 may be ring-shaped. The outer diameter of the outer wall 26 of the male valve element 25 may correspond to the inner diameter of the inner wall 27 of the female valve element 24. In a coupled condition, the ring-shaped front end surface 33 may extend inwards from the inner wall 35 of the female valve element 24. The front end surface 33 may be ring-shaped. The piston fluid channel may form the receiving female valve 24.

The surface area of the compensatory surface 30 may approximately equal to, or higher than, the surface area of the front end surface 33 of the male valve element 25. The outer diameter Do and the inner diameter Dᵢ of the compensatory surface element 29 may be adapted so that the compensatory surface 30 is approximately equal to, or higher than the surface area of the front end surface 33 of the male valve element 25. In other embodiments, the compensatory surface 30 may comprise any protrusion having said outer diameter Do and inner diameter D_{i.} The compensatory surface 30 may comprise a rib, a funnel shaped part, or the like, locally narrowing the fluid channel wall, with respect to the fluid channel wall formed by the piston 21. The deviation of the fluid channel wall, as provided by the compensatory surface 30, may be arranged to provide for a retention force of the piston 21, retaining the piston 21 with respect to the receiving coupler 20 in a coupled condition.

In other embodiments, a ring-shaped surface 33 may be determined by a difference in inner diameter of other types of interconnecting parts of the couplers 19, 20, for example of other types of valve assemblies. A difference in inner diameter of interconnecting parts may result in a surface 33 that projects inwards into the fluid channel 23. Hence, the surface area of the compensatory surface 30 may be equal to or larger than a surface area projecting inwards into the fluid channel 23, as a result of a difference in diameter of interconnecting parts of the couplers 19, 20.

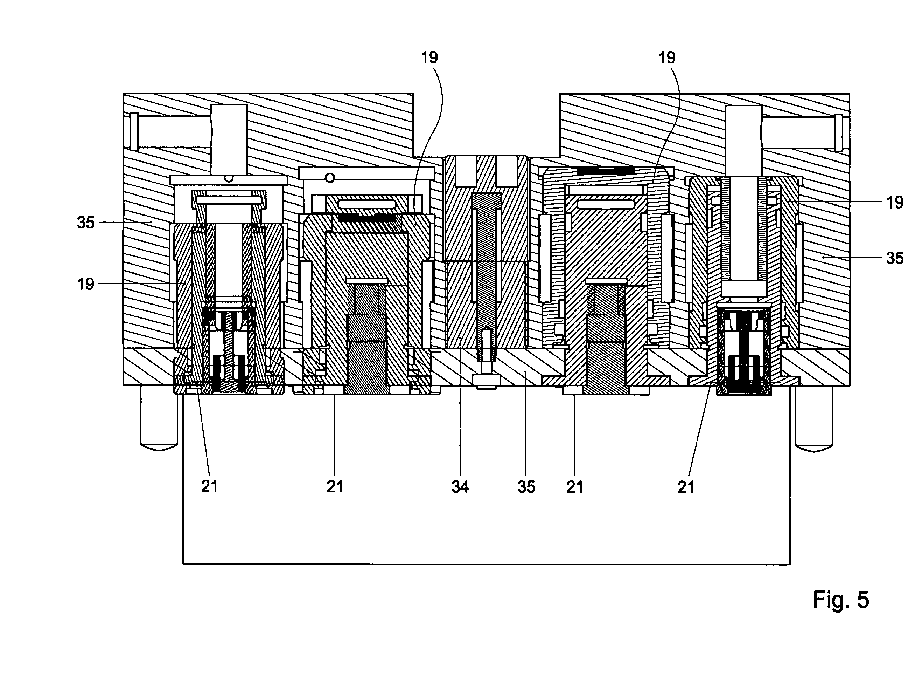

Fig. 5 illustrates a cross-sectional front view of a fluid coupler arrangement 18. The fluid coupler arrangement 18 may comprise an auxiliary drive element 34. The auxiliary drive element 34 may be arranged to drive the piston 21 into an extended and retracted position. The auxiliary drive element 34 may comprise a pressurized fluid actuator. The auxiliary drive element 34 may be driven by the second pressurized fluid circuit. The auxiliary drive element 34 may drive multiple pistons 21 at the same time, so that multiple couplers 19, 20 may connect at the same time. The multiple pistons 21 may be connected to each other via a connection frame 35, which may comprise a block or cartridge or the like. The auxiliary drive element 34 may be arranged to keep the couplers 19, 20 locked together. The auxiliary drive element 34 may exert pressure to the couplers 19, 20 after the couplers 19, 20 are coupled. As known in the art, one or both of the valve elements 24, 25 may be provided with a resilient member that exerts a force onto the respective valve element 24, 25 after being coupled. This resilient member may function as to close the respective valve element 24, 25 after decoupling, and/or as to jump into a coupled position during coupling. The auxiliary drive element 34 may be arranged to exert a force on the respective pistons 21 so as to compensate for the forces that are exerted by the resilient members of the respective valve elements 24, 25, so that the couplers 19, 20 may be retained in a coupled condition.

Furthermore, the second pressurized fluid circuit may be provided with a valve arrangement that is arranged to redirect fluid for driving the locking member 15 or the piston 21. The valve arrangement may be connected to a distant operation panel in the cab of the machine 1, so that the locking member 15 and the fluid coupler 19 may be operated from the cab of the machine 1.

### Industrial Applicability

In general, work tools 3 may be used for handling heavy materials. Work tools 3 may demolish, drill, dig, plow, cut, grab and/or carry heavy materials which may include sand, stone, metal, and more. Work tools 3 may be coupled to and powered by machines 1, in particular mobile host machines. The machine 1 may be provided with transmissions, hydraulic equipment, booms 2 and/or sticks for driving the work tool 3. Work tool operations may be controlled by the operator via an operating panel in the cab of the machine 1. Mounting brackets 5, 6 may permit that the work tool 3 is coupled and locked to the machine 1 without the operator having to leave the cab. Fluid couplers 19, 20 may permit that the fluid circuit channels of the machine 1 and the fluid circuit channels of the work tool 3 are coupled, so that a fluid passage is established between the work tool 3 and the machine 1 and the work tool 3 may be powered. When the couplers 19, 20 are coupled, fluid may flow through the couplers 19, 20 at relatively high speeds, for example at least approximately 150, or at least approximately 250 liters per minute, for operating relatively heavy work tool operations.

When the pressurized fluid flows through the couplers 19, 20, forces may be exerted on the fluid channel walls by the pressurized fluid. These forces may be exerted on the fluid channel walls, and may try to push the couplers 19, 20 apart, especially at locations where there is a change in inner diameter of the fluid channel walls. These forces may try to decouple the piston 21 from the receiving coupler 20. The force of an auxiliary drive element 34 may not be enough to keep the couplers 19, 20 together against the forces exerted by the pressurized fluid.

The compensatory surface element 29 may compensate for the forces that are exerted by the changes in inner diameter that may try to move the piston 21 with respect to the receiving coupler 20. The compensatory surface 30 may be configured such that the forces of the fluid, applied to the inner wall of the fluid channel of the extendable coupler 19, are such that the piston 21 is retained in an extended position. The compensatory surface 30 may comprise a deviation in the inner wall of the fluid channel.

In the shown example, the compensatory surface element 29 may provide for a compensatory surface 30 that compensates for the forces caused by the difference in inner diameter as a result of the male valve element 25 being situated in the female valve element 24. By providing a compensatory surface 30 these forces may be uplifted, at least when the surface area of the compensatory surface 30 is equal to, or higher than, a surface area as a result of the difference in inner diameter of the interconnecting coupler parts 19, 20, which in this example may be the front end surface 33 of the male valve element 25.

The compensatory surface 29 may uplift relatively strong forces exerted by the pressurized fluid on the piston 21. The compensatory surface 29 may be arranged to retain the piston 21 in an extended position, when fluid flows through. The auxiliary drive element 34 may drive the piston 21 in the direction of the receiving coupler 20, before the fluid flows through. Optionally, the auxiliary drive element 34 may aid in keeping the piston 21 coupled to the receiving coupler 20 when fluid flows through the couplers 19, 20. The auxiliary drive element 34 may be readily driven by the second pressurized circuit, which may have a lower pressure and/or speed than the first pressurized circuit. In one embodiment, use of a locking notch for keeping the couplers 19, 20 together may not be needed.

Within the extendable coupler 19, the piston 21 may be moved with respect to the static portion 22. It may not be necessary to displace the fluid circuit hoses that are connected to the static portion 22. These hoses may remain in place, while the pistons 21 may be repetitively moved, so that possible damaging of the fluid circuit channels may be prevented. This may allow for arrangement of the couplers 19, 20 in relatively small spaces. Because also mechanical locking notches for locking the couplers 19, 20 together may not be needed, so that the fluid coupler arrangement 18 may be space saving and of reduced complexity.

Before coupling the two couplers 19, 20, the work tool 3 may be coupled to the host machine 1. This may be achieved by locking the machine mounting bracket 5 to the work tool mounting bracket 6. The work tool 3 may be locked to the host machine 1, for example by a locking member 15. Fluid may flow through the second pressurized circuit to drive the locking member 15 into a locking position. When the work tool 3 is locked to the host machine 1, the couplers 19, 20 may extend approximately opposite each other.

After locking the work tool 3 to the machine 1 the locking member 15 may remain in a locked position and the valve arrangement may direct the fluid in the second pressurized fluid circuit to flow through the auxiliary drive element 34. By this valve arrangement, it may be prevented that the pistons 21 are moved before the work tool 3 is locked to the machine 1. After locking, the auxiliary drive element 34 may drive the pistons 21 in the direction of the receiving couplers 20, so that the couplers 19, 20 may be coupled. The male valve element 25 of the piston 21 may move into the receiving coupler 20, so that its front end surface 33 may extend inwards from an inner wall of the receiving coupler 20. Then, pressurized fluid may flow through the extendable and the receiving coupler 19, 20. The flowing of fluid may provide for a retention force retaining the couplers 19, 20 with respect to each other. The fluid may flow through the valves 24, 25. The fluid flowing through the couplers 19, 20 may have a significant higher pressure than the fluid flowing through the second pressurized fluid circuit.

A part of the pressurized fluid may be deviated by a compensatory surface 30, which may cause the couplers 19, 20 to be retained in a coupled condition. The fluid flow may create forces around the compensatory surface 30 that may be sufficient to retain the couplers in an engaged position. In an embodiment, the compensatory surface may intersect with a main direction of flow 32 of the fluid. The auxiliary drive element 34 may aid in retaining the couplers 19, 20 in coupled condition.

It shall be readily apparent to the skilled person that various modifications and variations can be made without departing from the scope or spirit of the disclosure. Other embodiments of the disclosure will be apparent to those skilled in the art from consideration of the specification and practice of the disclosure disclosed herein. It is intended that the specification and examples be considered as exemplary only. Although the preferred embodiments of this disclosure have been described herein, improvements and modifications may be incorporated without departing from the scope of the following claims.

## Claims

1. Fluid coupler arrangement for a first pressurized fluid circuit, comprising
an extendable fluid coupler,
a receiving fluid coupler, to be coupled to the extendable coupler, so that in a coupled condition of the couplers the first pressurized fluid circuit extends through the couplers,
fluid channels extending through the couplers, wherein
the extendable coupler comprises a static portion and a piston that is extendable with respect to the static portion,
the extendable coupler comprises a compensatory surface being fixedly connected to the static portion, and
the compensatory surface comprises a deviation with respect to the wall of the fluid channel of the extendable coupler, to at least partially retain the piston in an extended position when fluid flows through the couplers.

2. Fluid coupler arrangement according to claim 1, wherein the compensatory surface projects inwards from the fluid channel wall, and the surface area of the compensatory surface is equal to or larger than a surface area projecting inwards into the fluid channel, as a result of a difference in inner diameter of interconnecting parts of the couplers.

3. Fluid coupler arrangement according to claims 1 or 2, wherein the interconnecting parts comprise a male and a female valve element at the end of the respective fluid channels, for connecting the fluid channels of the couplers.

4. Fluid coupler arrangement according to any of the preceding claims, wherein
the compensatory surface element comprises a tube extending into the fluid channel of the piston, and
the piston, the fluid channel in the piston, and the compensatory surface element are aligned coaxially.

5. Fluid coupler arrangement according to any of the preceding claims, wherein the extendable coupler comprises a female valve element and the receiving coupler comprises a male valve element that corresponds with the female valve element.

6. Fluid coupler arrangement according to any of the preceding claims, wherein an auxiliary drive element is provided for driving the piston, wherein the auxiliary drive element is arranged to
extend and/or retract the piston, and
at least partially retain the piston in an extended an/or coupled position in addition to the compensatory surface.

7. Fluid coupler arrangement according to claim 6, wherein multiple extendable couplers are provided, and the multiple pistons of the extendable couplers are moved at the same time by the auxiliary drive element.

8. Fluid coupler arrangement according to claim 6 or 7, wherein the auxiliary drive element is arranged to be driven by a second pressurized fluid circuit having a lower pressure than the first pressurized fluid circuit.

9. Fluid coupler arrangement according to any of the preceding claims, wherein the first pressurized fluid circuit is arranged so that in operation the speed of the fluid is approximately 150 liters per hour or more, preferably approximately 250 liters per hour or more, more preferably approximately 300 liters per hour or more.

10. Host machine and work tool assembly, comprising
a host machine and a work tool,
a work tool coupling arrangement for coupling the work tool to the host machine, wherein
a pressurized fluid circuit is provided along the host machine and the work tool, and
the coupling arrangement is provided with a fluid coupler arrangement according to any of the preceding claims for connecting the pressurized fluid circuit of the host machine to the respective pressurized fluid circuit of the work tool.

11. Host machine according to claim 10, comprising
a locking member for retaining the work tool with respect to the machine, and
a secondary pressurized fluid circuit arranged to guide fluid having a lower pressure than the pressure of the fluid of the first pressurized fluid circuit, the second pressurized fluid circuit being arranged to
drive the locking member, and
drive the auxiliary drive element for moving the piston.

12. Host machine according to claim 10 or 11, wherein the secondary pressurized fluid circuit comprises a valve arrangement arranged to direct the fluid through the locking member or the auxiliary drive element.

13. Extendable fluid coupler for a coupling ends of a pressurized fluid circuit, comprising
a static portion and a piston that is extendable with respect to the static portion,
a fluid channel extending through the static portion and the piston, a compensatory surface being fixedly connected to the static portion, the compensatory surface comprising a deviation with respect to the wall of the fluid channel, to at least partially retain the piston in an extended position when fluid flows through the couplers.

14. Method of at least partially retaining two fluid couplers of a first pressurized fluid circuit in a coupled condition, comprising
moving an extendable coupler at least partly in the direction of a receiving coupler,
pressurizing fluid in the first pressurized fluid circuit to flow through the extendable and the receiving coupler, and,
creating a force by the fluid flow around a compensatory surface sufficient to retain the couplers together.

15. Method according to claim 14, wherein a part of the pressurized fluid is deviated by a compensatory surface that projects inwards from the wall of the fluid channel of the extendable coupler,
a part of the pressurized fluid is deviated by a difference of inner diameter of the fluid channel as a result of interconnecting coupler parts, and
the surface area of the compensatory surface is equal to, or higher than, a surface area as a result of the difference in inner diameter of the interconnecting coupler parts.

16. Method according to claim 14 or 15, wherein multiple extendable couplers are at least partly driven by a single auxiliary drive element that is driven by a second pressurized fluid circuit that has a lower pressure than the first pressurized fluid circuit.

17. Method according to any of claims 14 - 16, wherein
one of the couplers is a part of a host machine and the corresponding coupler is a part of a work tool,
the work tool is coupled to the host machine,
the work tool is locked to the host machine,
the respective couplers are coupled, and
fluid flows through the coupled couplers.
